# EUROPEAN PATENT APPLICATION

(11) **EP 2 169 527 A1**
(43) Date of publication of application: **31.03.2010**
(21) Application number: 09167748.4
(22) Date of filing: 12.08.2009
(51) Int. Cl.: G06F 3/048

(54) **Method and apparatus for displaying content at a mobile device**

(30) Priority: 30.09.2008 GB 0817828
(71) Applicant: Rapid Mobile Media Ltd., Edinburgh EH2 3ES (GB)
(72) Inventor: Marshall, Richard, Edinburgh, EH2 3ES (GB)
(74) Representative: Hewett, Jonathan Michael Richard

(57) **Abstract**

The invention relates to displaying content at a mobile device. In particular, the invention provides a method and apparatus arranged to display content at a mobile device in association with a graphical device indicating a method of user interaction associated with the content. The mobile device is arranged to detect, at a detector such as a motion detector or on a touch screen of the mobile device, a user interaction and to determine whether the user interaction corresponds to the indicated method of interaction. The method and apparatus are arranged to perform an action relating to the content in response to the detection of the indicated method of interaction.

## Description

The invention relates to displaying content at a mobile device, particularly but not exclusively to methods of user interaction with a mobile device, the user interaction relating to the display of content received over a communications network.

Mobile devices having internet connectivity and browsing facilities, such as mobile phones and personal data assistants (PDAs), are now common in the marketplace. As the availability of these devices has increased, so too has the amount of content available to and accessed by users of these devices over the internet.

Internet content providers are increasing looking to ways of generating revenue from the delivery of content to users, without directly charging the user. The provision of advertising in conjunction with the content is one way of achieving this. For instance, many web pages contain embedded advertisements or are associated with 'pop-up' adverts which open in conjunction with the web page, these providing a source of revenue for the web page operator. Such advertising can be pre-embedded in a mobile web page or added to the web page after the content has been requested by a user, for instance using advertising selected according to a targeted advertising technique.

The amount and variety of content provided to mobile device users is therefore continually increasing, resulting in the need for improved methods for users to interact with this content such that the content is visible, yet provided in a non-intrusive manner.

The present invention aims to address the limitations associated with available methods for users to interact with content on mobile devices.

According to the invention, there is provided a method of displaying content at a mobile device, the method comprising receiving content at the mobile device over a communication network, displaying the received content and a graphical device indicating a method of user interaction associated with the received content, detecting, at a detector associated with the mobile device, a predetermined user interaction sequence, determining whether the detected predetermined user interaction sequence corresponds to the indicated method of interaction and, in response to a sequence corresponding to the indicated method of interaction, performing an action relating to the content.

The detector can comprise at least one of a motion detector and a touch screen.

The method can further comprise displaying an icon in associated with the graphical device, the icon indicating the action relating to the content.

The received content can comprise first content and the action can comprise controlling the screen to display second content received at the communications interface, the second content being associated with the first content.

The first content can comprise an advertisement and the second content can comprise a web page.

The advertisement can comprise a pop-up advertisement and the action can comprise closing a window associated with the pop-up advertisement to display the first content.

The first content can comprise a web page, said graphical device being displayed in association with an advertisement on said web page and the second content can comprise additional content associated with the advertisement.

The graphical device can comprise a first graphical device, and the method can further comprise displaying the second content in association with a second graphical device indicating a method of user interaction, and re-displaying the first content in response to the detection at the detector of a user interaction with the mobile device corresponding to the method of user interaction indicated by the second graphical device.

The method of user interaction indicated by the second graphical device can be different from the method of user interaction indicated by the first graphical device.

According to the invention, there is also provided a method of displaying content at a mobile device, the method comprising receiving content at the mobile device over a communication network, displaying the received content and a graphical device indicating a method of user interaction associated with the received content, detecting, at a motion detector, a movement of the mobile device, determining whether the detected movement corresponds to the indicated method of interaction and, in response to a movement corresponding to the indicated method of interaction, performing an action relating to the content.

According to the invention, there is further provided a method of displaying content at a mobile device, the method comprising receiving content at the mobile device over a communication network, displaying the received content and a graphical device indicating a method of user interaction associated with the received content, detecting a user interaction at a touch sensitive screen of the mobile device, determining whether the detected interaction corresponds to the indicated method of interaction associated with the received content and, in response to a movement corresponding to the method of interaction associated with the received content, performing an action relating to the content.

According to the invention, there is also provided a mobile device comprising a communications interface for receiving content over a communications network, a screen, a detector for detecting user interactions in relation to the mobile device and a processing unit configured to control the screen to display content received at the communications interface, said content being displayed in association with a graphical device indicating a method of user interaction associated with the received content, wherein, the processing unit is further configured, in response to the detection at the detector of a predetermined user interaction sequence corresponding to the method of user interaction indicated by the graphical device, to perform an action relating to the content.

According to the invention, there is also provided a mobile device comprising a communications interface for receiving content over a communications network, a screen, a motion detector for detecting movement of the mobile device, and a processing unit configured to control the screen to display content received at the communications interface, said content being displayed in association with a graphical device indicating a method of user interaction associated with the received content, wherein, the processing unit is further configured, in response to the detection at the motion detector of a movement of the mobile device corresponding to the method of user interaction indicated by the graphical device, to perform an action relating to the content.

According to the invention, there is also provided a mobile device comprising a communications interface for receiving content over a communications network, a touch-sensitive screen and a processing unit configured to control the screen to display content received at the communications interface, said content being displayed in association with a graphical device indicating a method of user interaction associated with the content, wherein, the processing unit is further configured, in response to the detection at the touch-sensitive screen of a user interaction corresponding to the method of user interaction indicated by the graphical device, to perform an action relating to the content.

According to the invention, there is also provided a method of providing content for display at a mobile device, the method comprising receiving content for display at the mobile device, associating a graphical device with the received content, the graphical device indicating a method of user interaction with the mobile device associated with the received content for performing a predetermined action, and providing the graphical device and the content to the mobile device.

The method can further comprise providing program instructions to the mobile device for controlling the mobile device to detect, at a detector associated with the mobile device, a predetermined user interaction sequence, determine whether the detected predetermined user interaction sequence corresponds to the indicated method of interaction and, in response to a sequence corresponding to the indicated method of interaction, perform an action relating to the content.

According to the invention, there is also provided a computer readable medium storing thereon program instructions to be executed at a processor of a mobile device, the program instructions comprising a first set of program instructions for causing the mobile device to receive content at the mobile device over a communication network, a second set of program instructions for causing the mobile device to display the received content and a graphical device indicating a method of user interaction associated with the received content, a third set of program instructions for causing the mobile device to detect, at a detector associated with the mobile device, a predetermined user interaction sequence, a fourth set of program instructions for causing the mobile device to determine whether the detected predetermined user interaction sequence corresponds to the indicated method of interaction and a fifth set of program instructions for causing the mobile device to perform an action relating to the content in response to a sequence corresponding to the indicated method of interaction.

According to the invention, there is also provided a computer readable medium storing thereon program instructions to be executed at a processor of a content server arranged to provide content to a mobile device, the program instructions comprising a first set of program instructions for causing the content server to receiving content for display at the mobile device, a second set of program instructions for causing the content server to associate a graphical device with the received content, the graphical device indicating a method of user interaction with the mobile device associated with the received content for performing a predetermined action and a third set of program instructions for causing the content server to provide the graphical device and the content to the mobile device.

Embodiments of the invention will now be described, by way of example, with reference to the accompanying drawings, in which:
Figure 1 schematically illustrates a system for providing content to a mobile device according to an embodiment of the invention;
Figure 2 schematically illustrates the components of a mobile device forming part of the system of Figure 1;
Figure 3 is a flow diagram illustrating method steps performed according to an embodiment of the invention in displaying content at a mobile device;
Figure 4 illustrates the mobile device of Figure 2 displaying pop-up advertising content in association with a graphical device;
Figure 5 illustrates the mobile device of Figure 2 displaying content following a user interaction in response to the displayed graphical device of Figure 4;
Figure 6 illustrates the mobile device of Figure 2 displaying content, including embedded advertising content, in association with a graphical device;
Figure 7 illustrates the mobile device of Figure 2 displaying pop-up advertising content following a user interaction in response to the displayed graphical device of Figure 6;
Figure 8 illustrates the mobile device of Figure 2 displaying content, including embedded advertising content, in association with a further graphical device; and
Figure 9 illustrates the mobile device of Figure 2 displaying pop-up advertising content following a user interaction in response to the displayed graphical device of Figure 8.

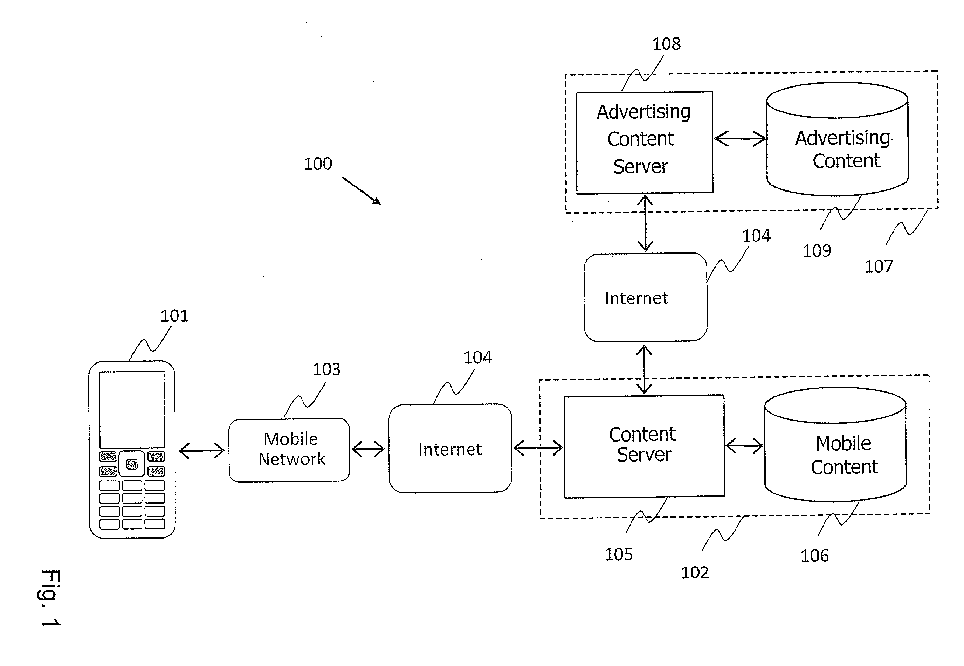

Referring to Figure 1, a communication system 100 according to an embodiment of the invention includes a mobile device 101, in this example a mobile telephone, connected to a content serving system 102 via a mobile network 103 and the internet 104. In the present example, the mobile network 103 is a 3G mobile network via which a user of the mobile telephone 101 can access the internet 104. Other mobile networks and internet standards can additionally or alternatively be used in accordance with the invention, for instance a global system for mobile communications (GSM) network connecting the device 101 to the internet 104 using the general packet radio service (GPRS) in conjunction with the wireless application protocol (WAP).

The content serving system 102 includes a content server 105 and a mobile content store 106, connected via a computer network connection. The content serving system 102 is connected to an advertising content serving system 107 via the internet 104. The advertising content serving system 107 includes an advertising content server 108 connected, via a computer network connection, to an advertising content store 109. The mobile content store 106 and advertising content store 109 are in the present example provided as hard disk arrays storing the relevant content. The mobile and/or advertising content store 106, 109 may be part of the respective content and advertising serving systems 102, 107 as in the present example or alternatively located remotely from the systems 102, 107 and connected to the systems 102, 107, for instance via a network such as the internet.

In use, the mobile content store 106 stores content, in the present case web pages, to be provided in response to user requests received from mobile devices such as the mobile telephone 101. Web pages stored in the content store 106 can have additional content, such as advertising content received from the advertising serving system 107, embedded within or otherwise associated with them. In alternative embodiments of the invention, the mobile content store 106 can alternatively store web pages having pre-existing additional content such as advertising embedded within them, as well as web pages having pop-up additional content associated with them.

In the present case, the additional content is advertising content, including advertisements and sponsorship messages, although the invention is also applicable to other types of additional content.

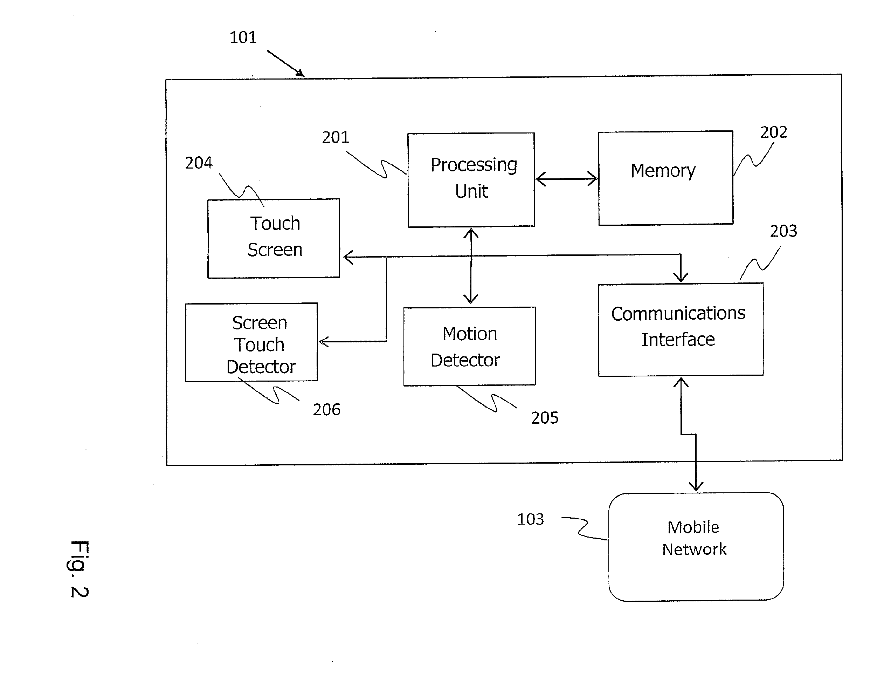

Figure 2 illustrates the components of the mobile device 101 illustrated in Figure 1. Referring to Figure 2, the mobile device 101 comprises a processing unit 201 connected to a memory 202, the processing unit 201 also connected to a communications interface 203, a screen 204, in the present case a touch-screen, a user interaction detector 205, in the present case a motion detector implemented using an accelerometer, and a screen touch detector 206 for detecting interactions of a user with the touch-screen 204. Both the motion detector 205 and screen touch detector 206 are arranged to communicate with the processing unit 201. The communications interface 203 provides a connection to the mobile network 103.

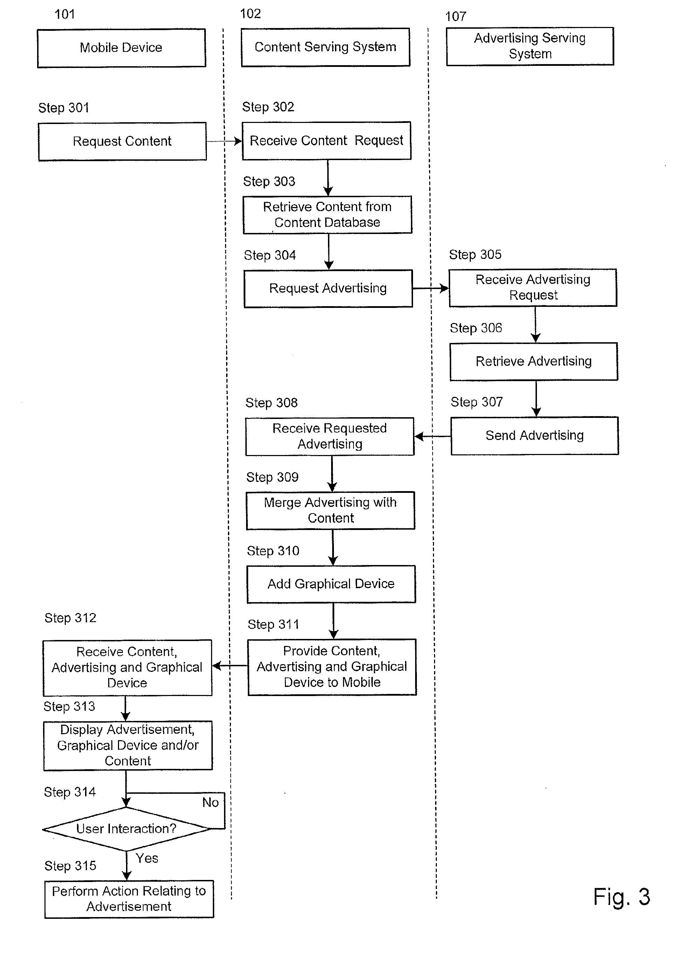

The operation of the communication system 100 and mobile device 101 in displaying content at the mobile device 101 will now be described with reference to the flow diagram of Figure 3.

Referring to Figure 3, a request for mobile content is generated at the mobile device 101 (step 301). The request, for instance, comprises a request to view a particular web page. The request can, for instance, be generated at the processing unit 201 of the mobile device 101 in response to a user selecting a web page link within a browser application running on the device 101, the web page link, for instance being selected using the touch-screen 204 of the mobile device 101. Alternatively, the request can be generated in other ways, for instance in response to a user manually entering the uniform resource locator (URL) address for a web page using a key pad (not shown) of the mobile device 101.

The request is transmitted from the communications interface 203 of the mobile device 101 to the content serving system 102 over the mobile network 103 and internet 104.

The content server 105 of the content serving system 102 receives the request from the mobile device 101 (step 302) and retrieves content corresponding to the request from the mobile content store 106 (step 303). In the present example, the retrieved mobile content is a web page which does not include advertising content and therefore the content server 105 of the content serving system 102 requests corresponding advertising content from the advertising server 108 of the advertising serving system 107, via the internet 104 (step 304).

The advertising server 108 of the advertising serving system 107 receives the request for advertising content (step 305) and, in response to the request, retrieves advertising content from the advertising content store 109 (step 306). The advertising content is, in the present example, selected to correspond to information relating to the subject matter of the requested mobile content, the information being provided to the advertising serving system 107 from the content serving system 102 together with the request for advertising content. The information can, for instance, comprise keywords associated with the content which are used to determine closely related advertising stored in the advertising content store 109. Alternative methods for selecting advertising can additionally or alternatively be used, such as selecting advertising based on demographic information associated with the user.

The retrieved advertising content is sent to the content serving system 102 (step 307) where it is received by the content server 105 (step 308) and merged, at the content server 105, with the retrieved mobile content (step 309). The advertising content is merged with the mobile content, which in the present case comprises a web page, by linking the advertising content to the web page such that the advertising content acts as a 'pop-up' when the web page is loaded onto the mobile device 101. As known in the art, this can be performed in various ways, for instance using a JavaScript implementation.

The content server 105 then adds a graphical device, which it selects and retrieves from a separate store (not shown), to the advertising content (step 310), as will be described in more detail below, and provides the mobile content, advertising content and graphical device to the mobile device 101 (step 311).

The mobile device 101 receives the mobile content, advertising content and graphical device at the communications interface 203 (step 312) and, under the control of the processing unit 201, displays on the screen 204 the mobile content and/or advertising content, together with the graphical device (step 313).

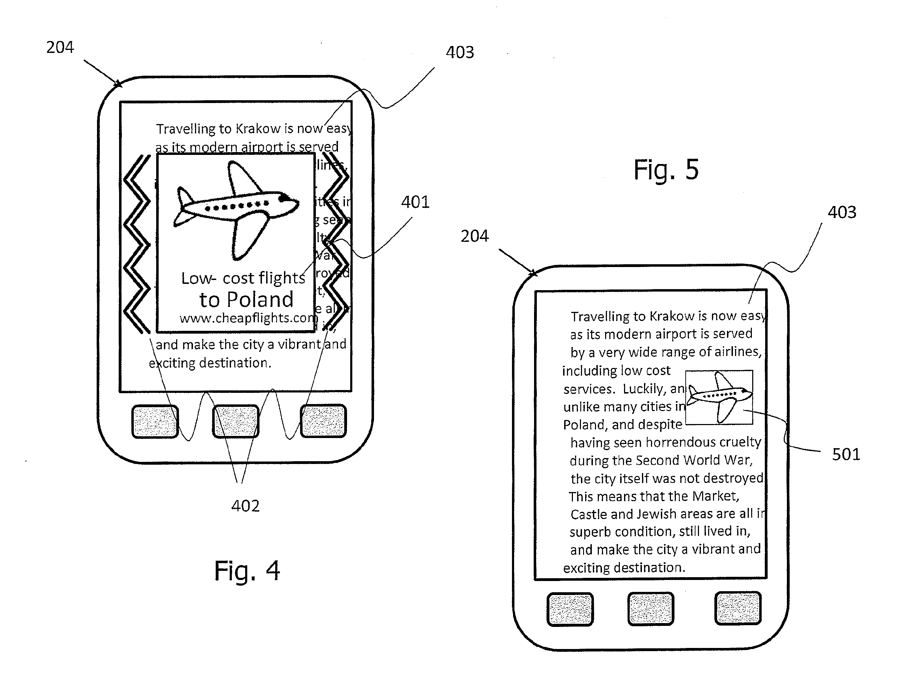

Figure 4 illustrates the mobile device 101 displaying pop-up advertising content in association with a graphical device according to an embodiment of the invention.

Referring to Figure 4, a pop-up advertisement 401 is displayed on the mobile device screen 204 in association with a graphical device 402. The pop-up advertisement 401 is displayed on the screen 204 such that it covers mobile web-page content 403 displayed on the downloaded mobile web page.

In the present example, the graphical device is an arrangement of zigzagging lines to the left and right-hand sides of the pop-up advertisement 401. The graphical device 402, also referred to as a gestural indicator, indicates a method of physical user interaction with the mobile device 101 required for the device 101 to perform an action in relation to the displayed pop-up advertisement 401. The method involves a predetermined user interaction sequence, which is straightforward for a user to perform, yet which results in a relatively complex sequence of detectable interactions which can be detected with complex detection devices such as a motion detector or touch screen. The relatively complex sequence of interactions goes beyond the interactions detectable, for instance, with conventional user input mechanisms such as a keypad associated with the mobile device 101.

In the present case, the method of interaction indicated by the graphical device 402 is for the user to shake the mobile device 101 in a sideways direction.

Referring to Figure 3, the processing unit 201 of the mobile device 101 determines whether the user has interacted with the mobile device 101 in the manner indicated by the graphical device 402 (step 314). This step is performed at the mobile device 101 under the control of the processing unit 201 based on program instructions stored at the memory 202 of the mobile device 101, these instructions being preloaded into the memory 202. In alternative embodiments, the instructions may be provided by a content server, such as the content server 105, either in association with the mobile content, advertising content and/or graphical device 402 or as a separate file. In the example of Figure 4, a sequence of movements of the mobile device 101 is detected using the motion detector 205, which provides an output to the processing unit 201 indicative of detected movements. The processing unit 201 determines whether the output from the motion detector 205 indicates that a user has moved the mobile device 101 in a shaking motion in a sideways direction. For instance, the direction and magnitude of detected movements of the mobile device 101 are determined based on outputs of the motion detector 205 and compared with predefined parameters to determine whether a required sequence of movements has been preformed, for instance a sequence indicating that the device 101 is being shaken from side to side.

If the user has moved the mobile device 101 in the required manner, an action is performed relating to the pop-up advertisement 401. In the present case, the action is to close the pop-up advertisement 401, such that the user can view the mobile web page 403, resulting in the screen display of Figure 5. As illustrated in Figure 5, the web page content 403 is displayed. In addition, a link 501 to the advertisement 401 is also displayed, such that the user can access the advertisement 401 again by selecting the link 501 in the usual manner, for instance using a control button on the keypad of the mobile device 101 to navigate to and select the link 501.

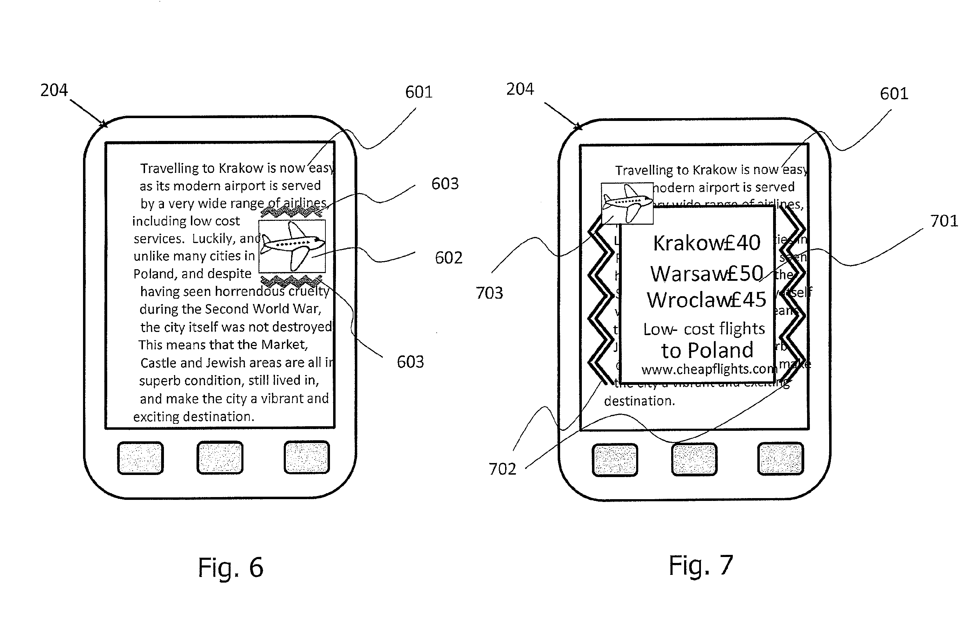

Figure 6 illustrates the mobile device 101 displaying content 601 according to a further embodiment of the invention, in this case the content including advertising content 602 embedded within the flow of the web page content. Such advertising is produced by the content server 105 of the content serving system 102 embedding the advertising content received from the advertising serving system 107 within the requested mobile content (step 309), rather than providing the advertising content as a pop-up window. Presenting an intriguing but minimal advertising message 602 within the flow of content encourages users to access the advertiser's content.

As illustrated in Figure 6, the embedded advertising content 602 is displayed in association with a graphical device 603. The graphical device 603 is an arrangement of zigzagging lines extending across a portion of the screen 204 at the top and bottom of the advertisement 602. The graphical device 603 indicates a method of physical user interaction with the mobile device 101 required for the device 101 to perform an action in relation to the embedded advertisement. In the present case, the method of interaction indicated by the graphical device is for the user to shake the mobile device 101 in a lengthwise, up-down direction.

The processing unit 201 of the mobile device 101 is arranged to determine whether the user has interacted with the mobile device 101 by shaking the mobile device 101 in the lengthwise direction, based on a sequence of outputs from the motion detector 205, in a similar manner to the method described above with reference to Figures 3 to 5. In the present case, the action performed in response to the required user interaction is to open a new pop-up advertisement, as illustrated in Figure 7.

Referring to Figure 7, a new pop-up advertisement 701 is displayed on the screen 204 in response to the user interaction corresponding to the graphical device 603 of Figure 6. In the present case, a further graphical device 702 is also illustrated in association with the pop-up advertisement 701, this being an arrangement of zigzagging lines extending in a vertical direction on the screen 204 to the left and right-hand sides of the pop-up advertisement 701. The further graphical device 702 indicates a method of user interaction with the mobile device 101 required for the device 101 to perform a further action. In the present case, the method of interaction indicated by the further graphical device 702 is for the user to shake the mobile device 101 in a sideways direction and the further action to be performed is that the pop-up advertisement 701 is closed, such that the display 204 reverts to the state illustrated in Figure 6.

As illustrated in Figure 7, an icon 703 is also displayed on the mobile device 101 in association with the pop-up advertisement 701. This is provided by the content server 105 together with the graphical device 702 and provides a further indication to users of the mobile device 101 of the action which will be performed in response to the user performing the indicated user interaction, namely that the pop-up advertisement 701 will be closed and the embedded icon 602, equivalent in appearance to the icon 703, displayed in its place.

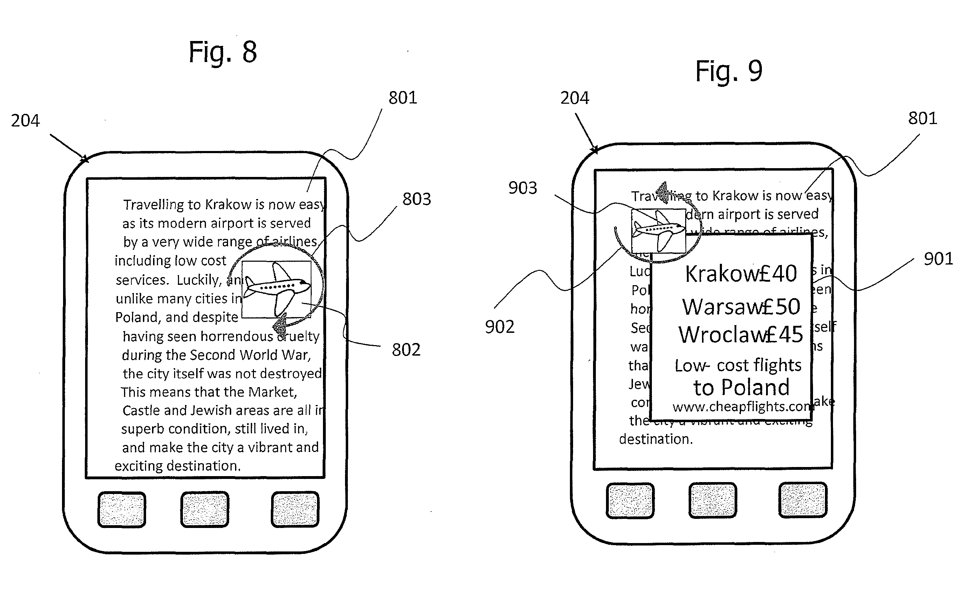

Figure 8 illustrates the mobile device 101 displaying content 801 including embedded advertising content 802, in association with an alternative touch-interaction graphical device 803, according to a further embodiment of the invention. The touch-interaction graphical device 803 is an arrow following a circular path around the embedded advertising content 802 and pointing in a clockwise direction. The touch-interaction graphical device 803 indicates a method of user interaction with the touch-screen 204 of the mobile device 101 required for the device 101 to perform an action in relation to the advertising content 802, this involving a predetermined user interaction sequence with the touch-screen 204. In the present example, the touch-interaction graphical device 803 indicates that a clockwise movement of a user's finger or a stylus in a circular motion over the touch-screen 204 will result in the action, which is in the present case the opening of a new pop-up advertisement relating to the embedded advertising content 802.

The processing unit 201 of the mobile device 101 determines whether the required sequence of user interactions with the touch screen has been performed, based on an output of the screen touch detector 206. For instance, a number of relative positions of a user's finger or a stylus on the touch screen 204 can be determined over a period of time to determine whether the required sequence of user movements, namely the movement in a clockwise circular pattern, has been performed.

Figure 9 illustrates a new pop-up advertisement 901 displayed on the screen 204 in response to the user interaction corresponding to the touch-interaction graphical device 803 of Figure 8.

In the present case, a further touch-interaction graphical device 902 is also illustrated in association with the pop-up advertisement 901, this being an arrow located in the top-left hand side of the pop-up advertisement 901 following a circular path and pointing in an anti-clockwise direction. The further touch-interaction graphical device 902 indicates a method of user interaction with the touch screen 204 of the mobile device 101 required for the device 101 to perform an action in relation to the pop-up advertisement 901. In the present example, the further touch-interaction graphical device 902 indicates that a clockwise movement of a user's finger or a stylus in a circular motion over the touch-screen 204 will result in the action, in the present case closing the pop-up advertisement 901, such that the display reverts to the display depicted in Figure 8.

As illustrated in Figure 9, an icon 903 is also displayed on the mobile device 101 in association with the pop-up advertisement 901. This is provided by the content server 105 together with the graphical device 902 and provides a further indication to users of the mobile device 101 of the action which will be performed in response to the user performing the indicated user interaction, namely that the pop-up advertisement 901 will be closed and the embedded icon 802 displayed in its place.

The present invention therefore provides a number of interaction mechanisms for a user to control their mobile device whilst displaying content. These mechanisms are readily comprehensible and intuitive to users, requiring minimal effort to perform. The methods of interaction according to embodiments of the invention result in a sequence of detectable user actions which can be measured by relatively complex detectors such as motion sensors, touch screens, microphones etc. By performing the methods of interaction, the user can therefore perform actions such as dismissing or expanding content, such as advertisements, making the manipulation of content more straightforward for the user and the display of content less intrusive to the user.

Although specific embodiments of the invention have been described, the invention is not limited to these embodiments and alternative arrangements and methods can be used. For instance, although the additional content, in the above examples advertising content, is described as being merged with the requested content, in particular a web page, at the content server 105, in alternative embodiments these steps can be performed elsewhere, for instance at the processing unit 201 of the mobile device 101. Also, the graphical devices need not be provided and associated with the advertising content at the content server 105, but can alternatively be provided and associated with the advertising content elsewhere, for instance at the processing unit 201 of the mobile device 101. The mobile device 101 can, for instance, be programmed to determine when pop-up content or embedded links are provided with mobile content and to automatically display graphical devices associated with the pop-up content or embedded links indicating ways of user interaction. The mobile device 101 can also be programmed to display the additional icons 703, 903 indicating to a user the outcome of performing the user interaction indicated by a graphical device.

Also, although specific methods of physical user interaction have been described, such as shaking the mobile device 101 or interacting in particular ways with the touch screen 204, many alternative methods are possible, including swiping gestures in relation to the touch screen 204, tilting the mobile device 101 etc.

Although the action performed in relation to the content has been described as an action relating to the display of the advertising content, the invention is not limited to this. For instance, the detection of user interactions can be used to perform other actions such as making purchases in relation to the advertising content or initiating telephone calls to advertising companies etc.

Furthermore, while the invention has been primarily described in relation to advertising content, it will be apparent to those skilled in the art that the features of the current invention may be applied to other content. For example a news story on a news website may contain user accessible links to further stories or images which the user may access via the features of the current invention.

The above-described method steps can be implemented as program code executable on the processing unit 201 of the mobile device 101 and/or at the content server 105, or elsewhere.

## Claims

1. A method of displaying content at a mobile device, the method comprising:
receiving content at the mobile device over a communication network;
displaying the received content and a graphical device indicating a method of user interaction associated with the received content;
detecting, at a detector associated with the mobile device, a predetermined user interaction sequence;
determining whether the detected predetermined user interaction sequence corresponds to the indicated method of interaction; and, in response to a sequence corresponding to the indicated method of interaction,
performing an action relating to the content.

2. A method according to claim 1, wherein the detector comprises at least one of a motion detector and a touch screen.

3. A method according to claim 1 or 2, further comprising displaying an icon associated with the graphical device, the icon indicating the action relating to the content.

4. A method according to claim 1, 2 or 3, wherein the received content comprises first content and the action comprises controlling the screen to display second content received at the communications interface, the second content being associated with the first content.

5. A method according to claim 4, wherein said first content comprises an advertisement and wherein said second content comprises a web page.

6. A method according to claim 5, wherein the advertisement comprises a pop-up advertisement and wherein the action comprises closing a window associated with the pop-up advertisement to display the first content.

7. A method according to claim 4, wherein said first content comprises a web page, said graphical device being displayed in association with an advertisement on said web page and said second content comprising additional content associated with the advertisement.

8. A method according to any one of claims 4 to 7, wherein the graphical device comprises a first graphical device, the method further comprising:
displaying the second content in association with a second graphical device indicating a method of user interaction, and re-displaying the first content in response to the detection at the detector of a user interaction with the mobile device corresponding to the method of user interaction indicated by the second graphical device.

9. A method according to claim 8, wherein the method of user interaction indicated by the second graphical device is different from the method of user interaction indicated by the first graphical device.

10. A mobile device comprising:
a communications interface for receiving content over a communications network;
a screen;
a detector for detecting user interactions in relation to the mobile device; and
a processing unit configured to control the screen to display content received at the communications interface, said content being displayed in association with a graphical device indicating a method of user interaction associated with the received content, wherein,
the processing unit is further configured, in response to the detection at the detector of a predetermined user interaction sequence corresponding to the method of user interaction indicated by the graphical device, to perform an action relating to the content.

11. A mobile device according to claim 10 in which the detector is a motion detector arranged to detect movement of the mobile device, or in which the screen is a touch-sensitive screen.

12. A method of providing content for display at a mobile device, the method comprising:
receiving content for display at the mobile device;
associating a graphical device with the received content, the graphical device indicating a method of user interaction with the mobile device associated with the received content for performing a predetermined action; and
providing the graphical device and the content to the mobile device.

13. A method according to claim 12, further comprising:
providing program instructions to the mobile device for controlling the mobile device to:
detect, at a detector associated with the mobile device, a predetermined user interaction sequence;
determine whether the detected predetermined user interaction sequence corresponds to the indicated method of interaction; and, in response to a sequence corresponding to the indicated method of interaction,
perform an action relating to the content.

14. A computer readable medium storing thereon program instructions to be executed at a processor of a mobile device, the program instructions comprising:
a first set of program instructions for causing the mobile device to receive content at the mobile device over a communication network;
a second set of program instructions for causing the mobile device to display the received content and a graphical device indicating a method of user interaction associated with the received content;
a third set of program instructions for causing the mobile device to detect, at a detector associated with the mobile device, a predetermined user interaction sequence;
a fourth set of program instructions for causing the mobile device to determine whether the detected predetermined user interaction sequence corresponds to the indicated method of interaction; and
a fifth set of program instructions for causing the mobile device to perform an action relating to the content in response to a sequence corresponding to the indicated method of interaction.

15. A computer readable medium storing thereon program instructions to be executed at a processor of a content server arranged to provide content to a mobile device, the program instructions comprising:
a first set of program instructions for causing the content server to receive content for display at the mobile device;
a second set of program instructions for causing the content server to associate a graphical device with the received content, the graphical device indicating a method of user interaction with the mobile device associated with the received content for performing a predetermined action; and
a third set of program instructions for causing the content server to provide the graphical device and the content to the mobile device.
